# EUROPEAN PATENT APPLICATION

(11) **EP 2 224 351 A1**
(43) Date of publication of application: **01.09.2010**
(21) Application number: 09153752.2
(22) Date of filing: 26.02.2009
(51) Int. Cl.: G06F 17/30

(54) **method for use in association with a multi-tab interpretation and rendering function**

(71) Applicant: Telefonaktiebolaget L M Ericsson (publ), 164 83 Stockholm (SE)
(72) Inventor: Gustafsson, Harald, SE-223 63, LUND (SE); Yuan, Song, SE-222 40, LUND (SE)
(74) Representative: Andersson, Björn E.

(57) **Abstract**

A method for use in association with a multi-tab interpretation and rendering function of a computing device is disclosed. The method comprises associating at least one tab of the multi-tab interpretation and rendering function with a first item, the first item being associated with a first web resource, assigning a first priority to the first item, and reserving resources of the computing device to the first item based on the first priority. Corresponding computer program product and software arrangement are also disclosed.

## Description

### Technical Field

The present invention relates generally to the field of resource reservation and allocation in association with multi-tab interpretation and rendering functions, such as multi-tab browsers. More particularly, it relates to resource reservation and allocation in association with multi-tab interpretation and rendering functions in resource-limited devices.

### Background

Mobile devices are currently becoming increasingly well adapted to Internet browsing applications. This entails that more users are regularly using their mobile devices for Internet browsing, expecting similar performance as they experience on, for example, a laptop.

Examples of mobile devices adapted for Internet browsing include, but are not limited to: mobile phones, organizers, smart phones, MP3-players with built-in Internet browsers, and browsing-dedicated devices. Browsers used in such devices include, but are not limited to: WebKit-based browsers, NetFront, Opera Mini, and Firefox mobile (Fennec). All of the above provide a capability of multi-tab browsing. The operability of the multi-tab browsing may differ depending on which platform the browser is running on.

Multi-tab browsing is well known in the art and may include functionality that enables a user to choose whether to open a link in a new tab and to switch between different tabs. Other functionality of a multi-tab browser may include that an Internet page referred to by a link of another Internet page is automatically displayed in a new tab opened by the multi-tab browser when a user clicks on the link. This functionality may depend on how the link is defined in the other Internet page. In some implementations, if the link has target attribute defined as "_blank" the Internet page referred to by the link will be displayed in a new tab.

Multi-tab browsing is applicable regardless of the input means of the device, for example it is applicable to both touch screen devices and keypad-only devices.

Theoretically, the number of concurrent open tabs in a multi-tab browser may be unlimited. However, a problem may be encountered for multi-tab browsers when resources (for example memory resources, such as the amount of physical memory (e.g. RAM - random access memory)) of the device are limited, as they may be for mobile devices. In resource-limited devices, opening more than a reasonable number of tabs in a multi-tab browser could lead to an unpleasant browsing experience for the user.

For example, if two or more tabs are open and the user is browsing in the second or subsequent tab and then switches back to the first tab, there may be a delay while loading and rendering the original Internet page in the first tab to the screen, which may be very annoying to a user when, for example, browsing an Internet page with news content.

In such an example scenario a normal behavior is that the user spawns (in a second or further tab) a large quantity of Internet pages with news articles from the top Internet page, and constantly switches back to the first tab with the top Internet page when an article has been read to possibly spawn more Internet pages from it. In such a scenario, it may be quite annoying to the user to have to wait, every time the user switches back to the top Internet page, during the delay while loading and rendering it.

Therefore, there is a need for methods and arrangements, for use in association with a multi-tab interpretation and rendering function, such as a multi-tab browser, of a computing device, that improve the time to display of a web page, such as an Internet page, when switching back to a corresponding tab of the multi-tab interpretation and rendering function. Thereby, the user experience of multi-tab browsing may also be enhanced.

### Summary

It should be emphasized that the term "comprises/comprising" when used in this specification is taken to specify the presence of stated features, integers, steps, or components, but does not preclude the presence or addition of one or more other features, integers, steps, components, or groups thereof.

The background given above is described in relation to multi-tab browsers, as will many of the embodiments of the invention in the following. However, it is to be understood that embodiments of the invention are not limited to browsers, but are equally applicable to any interpretation and rendering function, that is any unit that is capable of interpreting and rendering content such as, for example, HTML (hypertext markup language), XML (extensible markup language), CSS (cascading style sheets) and JavaScript. It is also to be understood that multi-tab interpretation and rendering includes any function that supports interpretation and rendering of several different web pages in parallel, whereby a user may switch between them. Thus, it is not limited to cases where tabs are shown or cases where there is user interaction via tabs. Examples of multi-tab functions where tabs are not shown and where user interaction is not via tabs include cases where special keys or touch screen gestures are used to switch between web pages.

It should be noted that the problems described above may arise in connection with any resource-limited device and that the solutions that will be described in the following are equally applicable to any device with a multi-tab browser or other interpretation and rendering function. Thus, the invention is not limited to application in mobile devices, even though the problems and solutions are described in the context of mobile devices. It may be applicable to any resource-limited device and may even be useful in a device, which is not resource-limited to optimize the use of resources.

Furthermore, while embodiments of the invention will be described in the following with reference to the interpretation and rendering of Internet pages, it is noted that embodiments of the invention are equally applicable to any type of page that may be interpreted and rendered by an interpretation and rendering function (such as a browser). The collection of such types of pages will be denoted web pages. Examples of web pages include, but are not limited to, Internet pages, intranet pages, locally stored pages, web applications, widgets, HTML pages, XML files, multimedia resource files and other resources that can be recognized by an interpretation and rendering function (e.g. a browser).

Similarly, while embodiments of the invention will be described in the following with reference to Internet resources, it is noted that embodiments of the invention are equally applicable to any type of resource that comprises content that may be interpreted and rendered by an interpretation and rendering function. The collection of such types of resources will be denoted web resources.

It is an object of the invention to obviate at least some of the above disadvantages and to provide methods and arrangements, for use in association with a multi-tab interpretation and rendering function of a computing device, that improve the time to display of a web page when switching back to a corresponding tab of the multi-tab browser.

According to a first aspect of the invention, this is achieved by a method for use in association with a multi-tab interpretation and rendering function of a computing device. The method comprises associating at least one tab of the multi-tab interpretation and rendering function with a first item, the first item being associated with a first web resource, assigning a first priority to the first item, and reserving resources of the computing device to the first item based on the first priority.

In some embodiments, the priority of the first item may be based on a content analysis of the first web resource. The content analysis may, for example, comprise one or more of: determining whether the web resource comprises only static information, determining whether the web resource comprises a form field, determining whether the web resource comprises a post form field, determining whether the web resource comprises a get form field, determining a number of key taps and/or mouse clicks entered in a form field of the web resource, determining whether the web resource comprises AJAX code (Asynchronous JavaScript and XML (Extensible Markup Language)), determining whether the web resource comprises AJAX code, and whether the AJAX code has interacted with an server hosting the web resource, determining an amount of JavaScript code comprised in the web resource, and determining whether the web resource comprises one or more JavaScript event functions, and comparing a number of key taps and/or mouse clicks received by the one or more JavaScript event functions with an event input threshold.

In some embodiments, the priority of the first item may be based on an analysis of the use history of the first web resource. The use history may be retrieved from history information of the multi-tab interpretation and rendering function. The analysis of the use history may, for example, comprise one or more of: determining whether any content of the web resource is made visible at a present moment of time, determining a number value associated with a number of times the web resource has been switched back to, comparing a number value associated with a number of times the web resource has been switched back to with a switch back threshold, determining a duration value associated with a duration between consecutive switch backs to the web resource, comparing a duration value associated with a duration between consecutive switch backs to the web resource with a duration threshold, determining a number value associated with a number of tabs of the multi-tab interpretation and rendering function that have been spawned from the web resource, comparing a number value associated with a number of tabs of the multi-tab interpretation and rendering function that have been spawned from the web resource with a spawned tab threshold, determining a number value associated with a number of origin uniform resource locators - URLs - associated with the web resource, comparing a number value associated with a number of origin URLs associated with the web resource with a origin URL threshold, determining an amount of time elapsed since the first tab was displayed, and determining a number of times the web resource has been associated with any tab of the multi-tab interpretation and rendering function.

In some embodiments, the method further comprises assigning a first classification to the first item, and reserving resources of the computing device to the first item based on the first priority and the first classification. In some embodiments, the classification of the first item may be based on a content analysis of the first web resource. The content analysis may, for example, comprise one or more of the examples given for the priority of the first item. In some embodiments, the classification of the first item may be based on an analysis of the use history of the first web resource. The use history may be retrieved from history information of the multi-tab interpretation and rendering function. The analysis of the use history may, for example, comprise one or more of the examples given for the priority of the first item.

In some embodiments, a value of the first priority is one of a plurality of priority values. The plurality of priority values may be divided into subgroups where each subgroup corresponds to a respective classification. The subgroups may or may not be overlapping. If the subgroups are overlapping, a priority value may belong to more than one subgroup, and thus correspond to more than one classification.

According to some embodiments, the method may comprise associating each of a plurality of tabs of the multi-tab interpretation and rendering function with a respective item, each of the respective items being associated with a respective web resource, assigning a respective priority to each of the respective items, and reserving resources of the computing device to each of the respective items based on their respective priority.

In some embodiments, the first item associated with a first web resource may comprise one of: a tab of the multi-tab interpretation and rendering function, a widget, a web application, an Internet page, an Internet site, a uniform resource locator (URL), and an Internet link.

The resources of the computing device may comprise at least one of storage resources, physical memory, virtual memory, secondary storage, processing resources, processor usage, data communication resources, and network bandwidth.

In some embodiments, the step of reserving resources of the computing device to the first item comprises at least one of: determining whether or not to page out information relating to the first item from a physical memory, determining whether or not to remove information relating to the first item from a virtual memory or a physical memory, determining whether or not to remove information relating to the first item from a secondary storage, determining whether or not to allow processor usage relating to the first item, and determining whether or not to allow bandwidth usage relating to the first item.

The step of assigning a first priority to the first item may, according to some embodiments, comprise assigning an initial priority to the first item, and updating the first priority based on information obtained after assigning the initial priority value.

In some embodiments, the method may further comprise storing the updated first priority as associated with the first item in a history information of the multi-tab interpretation and rendering function.

According to some embodiments, the method may further comprise allocating resources of the computing device to the first item based on the first priority.

The multi-tab interpretation and rendering function may be a multi-tab browser.

A second aspect of the invention is a computer program product comprising a computer readable medium, having thereon a computer program comprising program instructions, the computer program being loadable into a data-processing unit and adapted to cause the data-processing unit to execute the method according to the first aspect when the computer program is run by the data-processing unit.

A third aspect of the invention is a software arrangement for use in association with a multi-tab interpretation and rendering function of a computing device. The arrangement comprises a module adapted to associate at least one tab of the multi-tab interpretation and rendering function with a first item, the first item being associated with a first web resource, a module adapted to assign a first priority to the first item, and a module adapted to reserve resources of the computing device to the first item based on the first priority.

A fourth aspect of the invention is a computing device comprising the arrangement of the third aspect.

In some embodiments, the computing device may further comprise storage resources, processing resources and data communication resources.

The computing device may be a communication device, a mobile terminal, a mobile telephone, or a portable browsing device.

In some embodiments, the third and fourth aspects of the invention may additionally have features identical with or corresponding to any of the various features as explained above for the first aspect of the invention.

An advantage of some embodiments of the invention is that the time to display of a web page when switching back to a corresponding tab of the multi-tab interpretation and rendering function is reduced.

Another advantage of some embodiments of the invention is that the time to display of a web page when switching back to a corresponding tab of the multi-tab interpretation and rendering function is lessened if the web page is one, which is frequently switched back to.

Another advantage of some embodiments of the invention is that the average waiting time for a user switching between tabs is reduced.

Another advantage of some embodiments of the invention is that methods are provided that enable resources that are limited to be used (e.g. reserved and assigned) in an efficient manner.

Another advantage of some embodiments of the invention is that straightforward and simple implementation is provided.

Yet another advantage of some embodiments of the invention is that resource overhead caused by the implementation of embodiments of the invention may be small compared to the improvements brought by them.

Another advantage of some embodiments of the invention is that they are applicable for existing interpretation and rendering function implementations (e.g. browsers). In one example implementation, embodiments of the invention may simply be appended to an existing web engine and corresponding browser.

### Brief Description of the Drawings

Further objects, features and advantages of the invention will appear from the following detailed description of embodiments of the invention, with reference being made to the accompanying drawings, in which:
Fig. 1 is a block diagram illustrating rendering of an Internet page by a browser;
Fig. 2 is a flowchart illustrating example method steps according to some embodiments of the invention;
Fig. 3A is a flowchart illustrating example method steps according to some embodiments of the invention;
Fig. 3B is a block diagram illustrating example history information of a browser according to some embodiments of the invention;
Fig. 4 is a block diagram illustrating an example assembly according to some embodiments of the invention; and
Fig. 5 is a schematic drawing illustrating a mobile terminal, wherein the mobile terminal may comprise an arrangement according to some embodiments of the invention.

### Detailed Description

In the following, embodiments of the invention will be described where each item associated with a tab of a multi-tab browser is assigned a priority and possibly a classification.

The use of the notation tab is not meant to limit the scope to a visual tab of the multi-tab browser. Contrarily, the use of the notation tab may also indicate, for example, the instance of a web page in a multi-tab browser.

The items in question are associated with a respective web resource and may comprise, but are not limited to, Internet pages, Internet sites, Internet links, URLs (uniform resource locators), partial URLs, (partial) URIs, Internet page files, and the tabs themselves.

The priorities (and classifications when applicable) are then used to determine resource reservation and/or allocation of the device in which the multi-tab browser resides. For example, the priority may determine how memory, processing and/or data communication resources are to be reserved and/or allocated to the respective tabs. Thus, by maintaining priority information for each item according to embodiments of the invention and by performing runtime behavior analysis, limited resources can be reserved and assigned (in place and time) to where they are needed the most.

Embodiments of the invention will be described in the following where particular partitions is disclosed between possible parameters for determining the classification and the priority respectively. It should be emphasized, however, that these partitions are merely examples used to illustrate embodiments of the invention and are by no means limiting. Contrarily, other embodiments may use other parameter partitions and/or may exclude some parameters entirely. Furthermore, some embodiments use both classification and priority while others use only priority (which in that case can just as well be termed classification).

As explained above, an unpleasant browsing experience for the user may be encountered when opening more than a threshold number of tabs in a multi-tab browser when resources of the device are limited. When switching back to a tab, a delay may be experienced until the Internet page is displayed. This delay may be due to paging out of the Internet page of the first tab from the physical memory (e.g. RAM) to the secondary storage (e.g. to a file in the persistent storage media). The delay may alternatively be due to a total or partial removal of the Internet page resources of the first tab from the storage means of the device. In such a case, the Internet page cannot be fully rendered without an Internet connection when switching back to the first tab. (In line with the generalizations indicated above, the Internet connection in this context is merely an example and other examples embrace anything from a network connection, via an Intranet connection, to a local file access connection.) Furthermore, using a random selection approach when selecting which tab is to be paged out or removed in case of resource exhaustion may not be optimal when it comes to user experience. Using a Not-Recently-Used (NRU) approach when selecting which tab is to be paged out or removed may be better but not optimal.

The above problem becomes detrimental to the user experience when, for example, browsing an Internet page with news content. In such a situation, typical user behavior would comprise spawning several new tabs from the news Internet page to read articles and frequently switching back to the tab with the news Internet page. A similar situation is encountered when, for example, an Internet search has been performed. In such a case a user is probably spawning new tabs from the search result page to view single items of the search result, and frequently switching back to the search result page to select another item.

Another issue that affects the user experience and the waiting time when switching back to a tab is web applications that may be left running for long periods in a tab by the user (e.g. gmail, facebook, etc). These applications may regularly update themselves in the background to be able to show the latest information when they are switched back to. Such updating takes resources from other tabs that may be in greater need for it.

As is evident from the above, different Internet pages in different tabs of a multi-tab browser may be treated differently by the user during a multi-tab browsing session. For some tabs, it is highly likely that the user switches back to them to view them again, while for other tabs, it may be most likely that the user simply opens, reads and closes them. Thus, it would be beneficial to have a way to determine how likely it is that a user switches back to a particular tab. Based on that determination it could be ensured, for those tabs that the user is likely to switch back to more frequently, that the Internet pages associated with those tabs are not paged out ill-considerably but are kept in the physical memory as far as possible. If it is not possible to avoid paging out of such Internet pages, it may be beneficial to at least make sure that the visible parts of the Internet pages are rendered. Such an approach may reduce the average waiting time when switching back to a tab of a multi-tab browser, because for most switch-backs the Internet page would not have to be paged-in to the physical memory, re-interpreted, or re-rendered to the display surface.

Further, tabs that are using system resources, such as network bandwidth and processor usage, (and the Internet pages associated with those tabs) should not be using resources ill-considerably. Such tabs should be allowed to use such resources as far as possible. However, if there is a situation of exhaustion of the network bandwidth and/or the processor usage, those resources might be controlled by allowing tabs to use them only to an extent such that the processor usage and/or network bandwidth is limited to a fair amount. Such an approach may reduce the average waiting time when rendering a visible tab and when a user interacts with the visible tab. At the same time, web pages of non-visible tabs than also use those resources may also get a fair amount of resources.

Therefore, embodiments of the invention assign priority (and possibly classification) information to each tab or URL (or other item associated with a web resource) in a multi-tab browser. As indicated above, the item may comprise, for example, a tab, an URL, a (partial) Internet page instance in a browser, etc. The priority (and classification) information thus associated with each item may then be used to prioritize differently for different tabs when reserving and/or allocating resources to it. Resources that are allocated while taking priority (and classification) into account may include, for example, memory share, processor share, secondary storage, and network bandwidth share. It is noted, that when reserving and allocation is described herein in terms of shares it is meant to include both the case when a relative value (e.g. a percentage of memory) of the resource in question is reserved and/or allocated and the case when an absolute value of the resource in question is reserved and/or allocated (e.g. a number of megabyte, a number of CPU (central processor unit) cycles, a number of bits/s).

The priority (and classification) information may be based on the type of web page (or other web resource) that is associated with the tab (e.g. its content, whether it is interactive, etc.) and/or on (current or past) user behavior (e.g. how often the tab is switched back to). The user behavior may, for example, be determined based on usage statistics per tab, per Internet site or per Internet page. Similarly, the type of web page may, for example, be determined per Internet site or per Internet page. In the following, we will only refer to Internet page, while it is understood that the embodiments are equally applicable in the context of Internet sites, URLs, tabs, or similar as explained above.

In the following, examples will be given as to how the parameters may be collected and used to determine a priority.

Parameters may, for example, comprise historical usage information of an Internet page, the result of a content analysis of an Internet page, and/or usage information of a tab.

In general, historical usage information of an Internet page may provide an insight to which tabs the user is likely going to switch back to more frequently. Thus, such information could be helpful to base the classification and/or priority on to enable that such tabs are prioritized when it comes to resource reservation and/or allocation. If any content of the web resource (such as part of an Internet page) is made visible at a present moment of time, it may get a high priority according to some embodiments of the invention.

Most browsers include the keeping of history information, like visited URLs and the time and date of the latest visit. As an example, the historical usage information that the classification and/or priority are to be based on may be collected from the history information of the browser. Some extra properties could also be appended to each item in the browser history information database to aid in the implementation of embodiments of the invention. For example, the browser may keep the following additional information, associated with each Internet page:
- If content of the web resource is currently made visible.
- How many times the URL has been visited.
- How many times (e.g. an average number of times per visit) the user switches back to a tab associated with the Internet page of that URL. For example, the average number of times that the tab is switched back to without immediately doing page reload or other major page updates (e.g. via AJAX calls) may be determined. It may be determined whether or not a reload or other page update is immediate by comparing a duration between the switching back to the tab and the reload or other update and compare the duration to a threshold. It may alternatively or additionally be determined whether or not a reload or other page update is immediate by determining whether or not there is a user interaction (like, for example, page scrolling) with the page switched back to. If there is user interaction with the page after the switching back but before the update, the update may be considered as not being an immediate update.
- Average time duration between consecutive switchbacks to the tab (or URL).
- How many links of the Internet page are clicked (for example, on the average or during a last visit) that causes creation of a new tab (i.e. while keeping the original Internet page open).
- For each Internet page in the browser history information, if that Internet page was opened (e.g. in a new tab) as a result of the user clicking on a link of another Internet page, the URL of the other (originating) Internet page (originating URL). As an alternative to associating the actual originating URL with the Internet page, a reference to that originating URL in the browser history database may be associated with the Internet page. This type of information may be used to build a tree of tab creation history.

Content analysis of an Internet page may result in a determination of how important it is to preserve information of an Internet page when the tab associated with the Internet page is switched away from, and possibly what kind of information is worth preserving. Examples of information that can be valuable for the content analysis comprise:
- If an Internet page contains any form fields with user input that have not been submitted to the server, it is highly likely that the user will be interested in that input being preserved even if switching away from the tab. That is, it is likely so that the user will switch back to this tab and need the entered information to be preserved. In some embodiments, higher priority is given to pages with post form field than to pages with get form fields. In some embodiments, the priority depends on the number of user mouse-clicks and/or key-taps (e.g. the larger the number of key taps, the higher the priority).
- If an Internet page contains AJAX JavaScript code that have interacted with server, it is highly likely that the user will be interested in preservation even if switching away from the tab. In general, the following rule of thumb may be used: the more JavaScript code there is on an Internet page, the more interactive is the page. This content information may be used to detect which tabs have a web-application running and which tabs have a static Internet page.

The browser history information and the content analysis are preferably associated with the corresponding Internet page. There may also (or alternatively) be information associated with the open tabs of the multi-tab browser. Such information may, for example, comprise information regarding when the tab was viewed, the most recent time the tab was viewed, how many times the tab has been viewed, and if it has been viewed at all. In some embodiments, such information is only maintained for the currently open tabs.

According to some embodiments, aggregated information is derived from the historic, content and browser information as described above. Aggregated information may be used to determine what type of Internet page the tab contains, and thus lead to a classification value. The type classification may, for example, be stored in the history information database of the browser. It may be used as an initial (or default) classification value when the Internet page is revisited.

The classification of a web resource (e.g. Internet page) in relation to its type may thus be regarded as similar to the priority assignment, but coarser. The classification may rely on the same parameters as the priority, or on a subset of the parameters used for priority, or on a completely different or overlapping set of parameters. In some embodiments, the classification is appended to the priority value. In some embodiments, the classification may be viewed as dividing the priority values into subgroups, each corresponding to a respective classification. If the classification uses at least one parameter that was not considered in the priority assignment, the subgroups may overlap.

Some embodiments may use the following classification types:
- Interactive page
- Major center page
- Dynamic center page
- Read once page

It may be determined that an Internet page is an interactive page from the content analysis. Typical examples of interactive pages are pages for web-mail and JavaScript games. A page that have received mouse clicks or key taps in a form field may be classified as interactive.

An Internet page that has AJAX JavaScript code, which is sending to and/or receiving from with the server, may be classified as interactive.

An Internet page, which has JavaScript event functions that respond to key taps or mouse clicks and have received at least a certain threshold of such events, may be classified as interactive. Such a threshold may, for example, be set so that pages which have a JavaScript menu navigating system is not classified as interactive and pages that run a local JavaScript game is classified as interactive. The threshold may be set to a sufficiently high value so that only few pages that are actually not interactive are classified as interactive.

It may be determined that an Internet page is a major center page from usage history and/or from current browser tab information. For example, if the user spawns many new tabs from the page and often returns to it, the page may be classified as a major enter page. Many major center pages may have fixed URLs. Typical examples of major center pages are main pages of news sites and forum topic list pages.

An Internet page with the exact URL existing in the browser usage history database and that has an average number of switching backs registered that is higher than a threshold may be classified as a major center page. In some embodiments, the threshold may be in the order of three.

An Internet page with the exact URL existing in browser usage history database and that has an average duration between switching back registered that is lower than a threshold may be classified as a major center page. In some embodiments, the threshold may be in the order of 5 minutes.

An Internet page with the exact URL existing in browser usage history database and that has a number of spawned tabs registered that is higher than a threshold may be classified as a major center page. In some embodiments, the threshold may be in the order of two.

An Internet page with the exact URL existing in browser usage history database as an originating Internet page for more than a threshold number of pages may be classified as a major center page. In some embodiments, the threshold may be in the order of three.

It may be determined that an Internet page is a dynamic center page from usage history and/or from current browser tab information. A (dynamic or major) center page is a page that a user spawns many new tabs from and often returns to. Dynamic center pages have non-static (i.e. varying) URLs. Typical examples of dynamic center pages are search result pages. Dynamic pages may be identified by their corresponding URL-specified host and directory, and a specified get variable name (such as "?X="), i.e. ignoring the variable values. For the following example Internet address, some embodiments of the invention would identify the corresponding page as a dynamic center page based on only the bold text: http://**www.google.se/search?hl**=sv**&q**=ericsson**&btnG**=Google-s%C3%B6kning**&meta**= Such an URL may be termed a dynamic URL.

According to some embodiments of the invention, dynamic center pages get the same classification as other dynamic pages in that family. A family of dynamic center pages may be defined as those having the same URL-specified host and directory (i.e. www.google.se/search in the example above), or as those having the same URL-specified host, directory, and get variable names (e.g. keywords in the example above). If, for example, a plurality of pages in the same family have the same host and directory, but differ in any other way (such as get variable names) and are classified as read once pages, then they are pruned from the family.

A family of dynamic pages may be specified as a family of dynamic center pages if at least one dynamic page within that family is determined to be a center page.

If the number of identified families of dynamic center pages, which have the same URL-specified host and directory but some different variable names, is higher than a threshold, then a new family of dynamic center pages may be determined by merging families that have the same URL-specified host, directory and any coinciding variable names. In some embodiments, the threshold may be in the order of three. If, for example, there are three dynamic pages as follows: "http://www.google.com/search?source=ig&hl=en&rlz=&q=test&aq=f", "http://www.google.com/search?hl=en&q=test&rlz=", and "http://www.google.com/search?hl=en&q=test", then dynamic center page may be determined based on only the bold text as follows: "http://**www.google.com/search?**source=ig&**hl**=en&rlz=&**q**=test&aq=f".

An Internet page with the dynamic URL family existing in browser usage history database and that has a number of median switching backs registered that is higher than a threshold may be classified as a dynamic center page. In some embodiments, the threshold may be in the order of three.

An Internet page with the dynamic URL family existing in browser usage history database and that has a median duration between switching back registered that is lower than a threshold may be classified as a dynamic center page. In some embodiments, the threshold may be in the order of 5 minutes.

An Internet page with the dynamic URL family existing in browser usage history database and that has a median number of spawned tabs registered that is higher than a threshold may be classified as a dynamic center page. In some embodiments, the threshold may be in the order of two.

An Internet page with the dynamic URL family referenced in browser usage history database as an originating Internet page and that in itself has a number of origin URLs registered that is higher than a threshold may be classified as a dynamic center page. In some embodiments, the threshold may be in the order of three.

In all the cases above, a number may be a current (i.e. latest) number, a median number, an average number, a maximum number, a minimum number, etc.

If no classification history information is available for an Internet page, the page may receive a default classification, for example termed read once page. Typical examples of read once pages are single news item pages, forum post item pages.

An Internet page, which is not classified as an interactive page, a major center page or a dynamic center page may be classified as a read once page.

An Internet page with only static information may be classified as a read once page.

It is to be noted that the classification of an Internet page may change over time. For example, a page that is visited for the first time may be initially classified as a read once page, but the classification may be changed later (e.g. to a center page) based, for example, on user behavior. As another example, an Internet page that is classified as an interactive page because it contains information entered by the user may later be reclassified as a read once page after a reload of the page discarding the information entered by the user.

According to some embodiments, the classifications above may be investigated and assigned in the order given above. That is, according to such embodiments, if a page is both interactive and a major center page, it is classified as an interactive page.

After a priority and possibly a classification have been assigned to an Internet resource related item, this may be used to determine how resources are to be reserved and/or allocated to the item. For example, an Internet page classified as an interactive page may be kept in the physical memory as far as possible, while an Internet page classified as a read once page may be paged out from the physical memory as soon as memory space is required for another Internet page.

The resources whose reservation and/or allocation are affected may, for example, be one or more of storage resources (e.g. physical memory or secondary storage), processing resources (e.g. processor loads), and data communication resources (e.g. network bandwidth). For a resource-limited device, such as a mobile device, any or all of the resources that are limited may be included in a priority-based resource reservation and allocation mechanism according to embodiments of the invention. Thereby, those resources can be carefully distributed and reserved/allocated to where they are most needed.

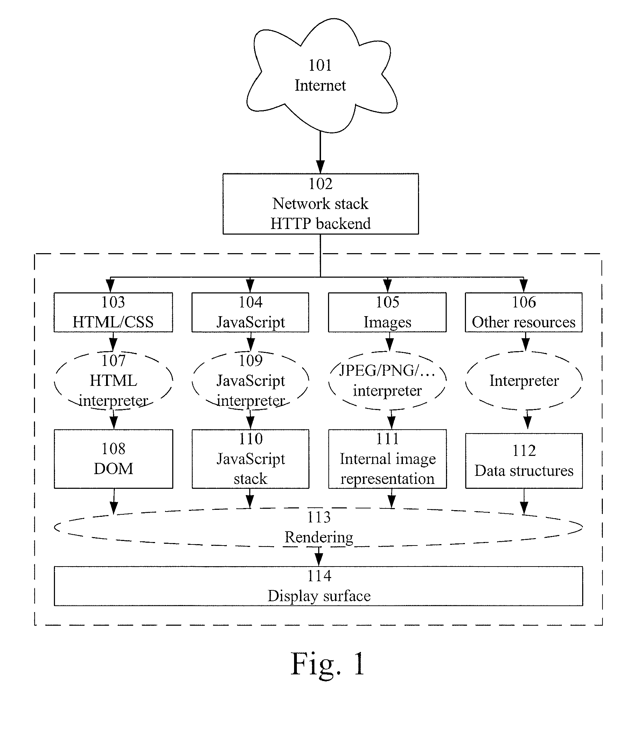

Different resources may be required to be able to show an Internet page in a browser. Such resources may include physical memory, processor usage, storage space (virtual memory), network bandwidth, etc. The resources involved during an example browsing session will be described in the following with reference to Figure 1, which schematically illustrates an example of a browser rendering an Internet page.

When the user enters an URL into the browser (e.g. by clicking a link or inputting the Internet address), the browser fetches the HTML (hypertext markup language) web page, CSS (cascading style sheets) files, JavaScript files and other related resources from the Internet 101 via a HTTP (hypertext transfer protocol) connection through the network stack 102 of the device wherein the browser resides. The downloaded files are cached in the file system 103, 104, 105, 106, so that they may be used (and re-used) without downloading them again. The web-engine HTML interpreter 107 interprets the HTML code of the web page and constructs a DOM (document object model) structure 108 for the page. The DOM structure 108 is kept in either physical memory or virtual memory. The JavaScript interpreter 109 interprets the JavaScript code, builds up a JavaScript stack 110 and interacts with the DOM structure108. The JavaScript stack 110 is kept in either physical memory or virtual memory. So the web-engines internal representation of a web page is the DOM structure 108 and the data structures 111, 112 that represent other multimedia resources like images, video, etc. These other data structures 111, 112 are kept in either physical memory or virtual memory. These internal representations 108, 111, 112 are rendered (in a rendering unit 113) to the display surface 114 by the web-engine. The display surface may, for example, comprise a frame buffer, a screen, or a memory area for rendered graphics.

In an ideal situation, each of the data structures are kept in the physical memory, so that, when the user switches back to the tab of the corresponding Internet page, the page is instantly available for the user. As explained above, this may not be possible in resource-limited devices. Therefore, resource management is required, and embodiments of the invention provide advantageous resource management approaches.

Some embodiments of the invention may apply the following example resource reservation and allocation rules:
Firstly, when a user opens a new page, the download of page content starts and the content is cached in the file system. In connection to these steps, the content is also rendered. The visible page (or part of the page) may be reserved/allocated a fair and high bandwidth share potential and processor share potential to allow the new page to be showed quickly. Non-visible pages (or non-visible parts of that page) use a fair and lower bandwidth share potential and processor share potential. If the visible page does not use its resource potential, other pages may use that slack.

Furthermore, pages with different classification and/or priority are reserved/allocated resources differently. For example, interactive pages may be prioritized over all other (non-visible) pages when resources are reserved and/or allocated.

Sometimes, read once page tabs are created out of view. Read once pages are reserved/allocated resources as late and as little as possible, e.g. only when visible. If the read once page is not visible, the downloading and rendering of the page may be delayed if the resources (e.g. any of: physical, memory, virtual memory, secondary storage, processor share and bandwidth share) are exhausted. Thus, read once pages may occupy minimal resources. The reserved/allocated bandwidth share of the download for a read once page may also be less than for otherwise classified pages (e.g. interactive pages and center pages).

If a read once page is spawned from another (original) page and that original page is an interactive page or a read once page, there may be a higher probability that the spawned read once page will be read directly than if the original page is a (major or dynamic) center page. Hence higher priority may be given to such pages in the resource reservation and allocation than to other read once pages.

Furthermore, read once pages that have already been shown and that are not currently shown may be the first to lose resources when resource limitations are reached.

Apart from taking account of the original page of a read once page as explained above, the other considerations may also be taken into account when prioritizing among several read once pages. The order in which the pages were viewed in and when the pages were viewed may be used as parameters. A read once page that has already been viewed and that has the longest duration since it was last viewed may lose resources first.

In general, the first resources to be lost may be memory resources associated with active content (e.g. JavaScript stack, DOM, decoded images, etc). The next resources to be lost may be memory resources associated with the cached files content. Finally, if nothing else can be kept in memory, at least the URL may be kept.

Regarding the prioritizing of resources reservation and/or allocation in connection to (dynamic or major) center pages, it is noted that center pages are often created in the visible front tab. Hence it is probably not possible to delay the resource usage of a new center page. However, the assigned bandwidth share for the download may be less than for interactive pages.

In some embodiments, center pages will maintain the memory resources associated with all active and cached content until all read once pages have lost all the memory resources associated with their active content. In some embodiments, center pages will maintain the memory resources associated with all cached content until all read once pages have lost all the memory resources associated with their cached content. As for the read once pages, if nothing else can be kept in memory, at least the URL may be kept.

Regarding the prioritizing of resources reservation and/or allocation in connection to interactive pages, it is noted that these pages are also often created in the visible front tab. They may also be maintained for long periods in a non-visible tab.

The assigned bandwidth share for the download of a new interactive page and any associated interaction with the corresponding Internet server may be the largest share (and have the highest priority) among the different page classifications.

The assigned processor share for interactive pages may have a high and fair priority among the different page classifications. The priority may be derived from the classification of visible and non-visible Internet pages.

In some embodiments, interactive pages will maintain the memory resources associated with all active and cached content until all other types of pages have lost all the memory resources associated with their active and cached content. As for the read once and center pages, if nothing else can be kept in memory, at least the URL may be kept.

Furthermore, interactive pages containing user entered form data may be given higher priority for maintaining memory resources.

Thus, if the user opens too many tabs or there is just not enough physical memory anymore, something needs to be paged out to the secondary storage. According to embodiments of the invention, the tabs associated with the least prioritized classifications and having the lowest priority among the tabs associated with the same classification start to be paged out.

If the device is also running out of secondary storage, then the tabs are going to be totally removed in an order that is based on their classifications and priorities. If nothing else can be kept, the browser will only save the URL of a page in order to be able to fetch it again from the Internet when the user switches back to the corresponding tab or if the memory usage rate is decreased later on.

Similar paging-out and removal from memory mechanisms may also apply to lower-level data structures. For instance, if the device is running out of secondary storage, the DOM structure, the JavaScript stack, and the internal representations of other resources of the page can be removed first, before having to remove everything except the URL related to a page. In such cases the HTML page, the JavaScript code and other related files may be kept. The aim of this extra level is to lessen the virtual memory usage while still being able to reduce the waiting time when switching back to the corresponding tab. This is achieved because the HTML page and other related files are still cached, so the browser only needs to interpret those files and render them again. This takes less time for the browser than if it would have to reload the page.

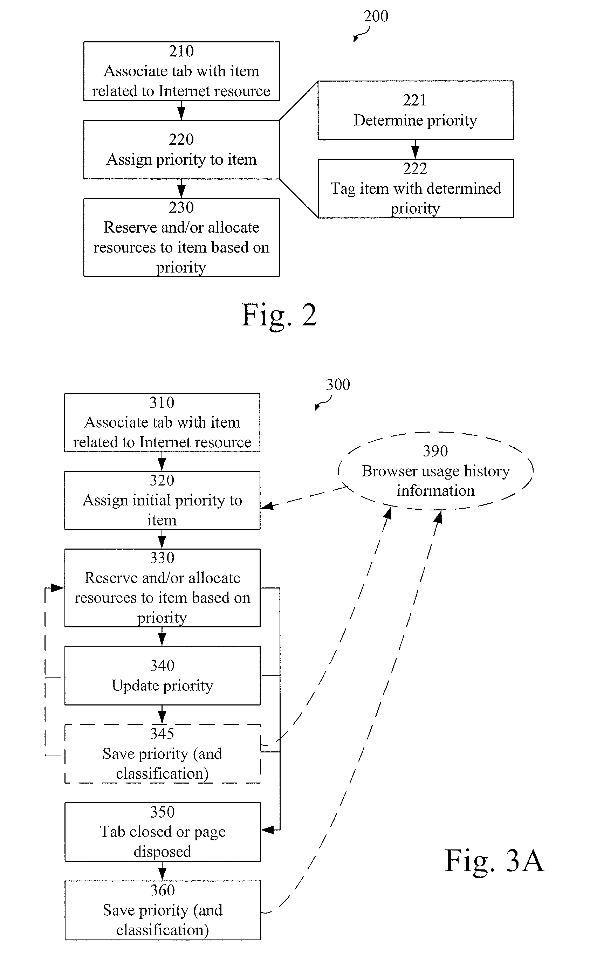

Figure 2 illustrates an example method 200 according to some embodiments of the invention. In step 210, a tab of a multi-tab browser is associated with an item, which in turn is associated with an Internet resource. The item may, for example, be an URL or the tab itself. This step may, for example, be executed as a response to a user clicking on a link or entering an Internet address in the browser. In step 220, a priority and possibly a classification is assigned to the item according to what has been described above. The step may comprise determining the priority and possibly the classification (step 221) and assigning the item with the determined priority and possibly the classification (step 222). In step 230, the priority (and classification) assigned in step 220 is used to reserve and/or allocate resources appropriately to the item.

The procedure in method 200 is followed for each tab in the multi-tab browser and thus provides an efficient way to reserve and/or allocate resources in relation to the need (current and likely future) of each respective tab.

Figure 3A illustrates an example method 300 according to some embodiments of the invention. In step 310, a tab of a multi-tab browser is associated with an item, which in turn is associated with an Internet resource. Step 310 may resemble step 210 of Figure 2.

In step 320, a priority and possibly a classification is assigned to the item according to what has been described above. At first the classification and priority assigned to a page may be default initial values or values loaded from the browser usage history information database 390 (which is not as such part of the method). Alternatively, usage information may be loaded from the browser usage history information database 390 and the classification and priority assigned to a page may be determined from such information. Step 320 may resemble step 220 of Figure 2.

In step 330, the priority and possibly the classification assigned in step 320 is used to reserve and/or allocate resources appropriately to the item. Step 330 may resemble step 230 of Figure 2.

During runtime, the browser monitors and analyzes user behavior. Thus, in step 340, the priority and the classification may be updated based on usage during the current session. When updated, the process may return to step 330 to re-reserve and/or re-allocate resources according to the updated classification and further priority information. In optional step 345, the updated priority and classification may be saved in the browser usage history information database 390. Alternatively (or additionally) the browser usage history information database 390 may be updated with current usage statistics.

In any case, when the tab is closed or information relating to the corresponding Internet resource is page disposed (step 350), the updated classification and priority may be saved in the browser usage history information database 390 (step 360). Alternatively (or additionally) the browser usage history information database 390 is updated with the usage statistics of the current session.

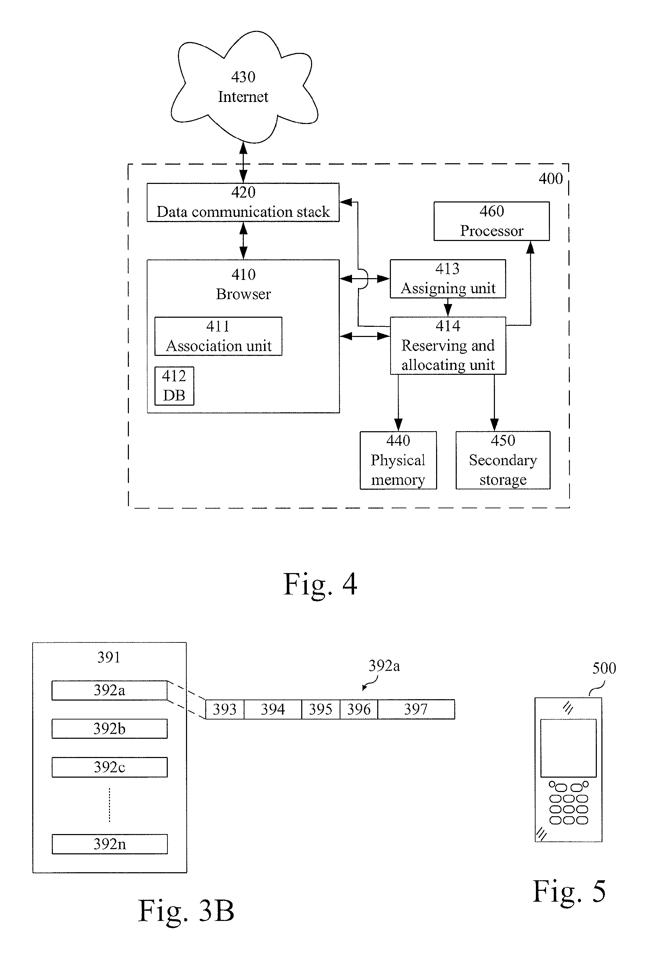

Figure 3B illustrates schematically an example browser usage history information database 390, comprising a number of posts (392a, 392b, 392c, 392n) each associated with a respective Internet resource. A post 392a may comprise a number of fields 393, 394, 395, 396, 397. Each field may comprise information relating to the corresponding Internet resource, such as for example, a URL, usage information (a number of visits, a time stamp of the latest visit), an originating URL, and a classification and/or priority according to embodiments of the invention.

Figure 4 illustrates an example assembly 400 according to some embodiments of the invention. The assembly comprises a multi-tab browser 410 and a data communication stack 420, which is connected to the Internet 430 (not part of the assembly). The browser 410 comprises an association unit 411, which is adapted to associate a tab of the browser with an item associated with an Internet resource, for example as described in connection to steps 210 and 310 of Figures 2 and 3 respectively. The browser also comprises a browser usage history information database (DB) 412. The browser usage history information database 412 may in fact be kept in either of a physical memory 440 (e.g. a RAM) or a secondary storage 450, both of which are also part of the assembly 400.

The assembly further comprises an assigning unit 413 and a reserving and allocating unit 414. These units are adapted to perform respectively: assigning of classification and priority to each item associated with a tab, and reservation and/or allocation of resources based on the classification and priority. Resources to be reserved and/or allocated may comprise the physical memory 440, the secondary storage 450, communication resources of the data communication stack 420 and processing resources of one or more processing units 460. The assigning and reservation and/or allocation of the assigning unit 413 and the reserving and allocating unit 414 may for example be performed in accordance with what has been described in connection to steps 220, 230, 320, 330 and 340 of Figures 2 and 3 respectively. The assigning unit 413 and the reserving and allocating unit 414 may be implemented external to the browser 410 as illustrated in Figure 4. Alternatively, one or both of them may be partially or fully integrated in the browser.

It should be noted that the assembly 400 may be embodied partly in software. For example, the browser 410 and its elements, the assigning unit 413, and the reserving and allocating unit 414 may be software-based units. In other embodiments, the entire assembly is realized in hardware.

Figure 5 illustrates an example mobile terminal 500. The mobile terminal may comprise arrangements according to embodiments of the invention. The mobile terminal 500 may, for example, comprise an arrangement as described in connection to Figure 4, or code performing the tasks of any of the methods as described in connection to Figures 2 and 3.

The mobile terminal 500 is illustrated as a mobile telephone in a schematic front view. The mobile terminal may comprise a display and a keypad or other input means, which together provides a man-machine interface for operating the mobile terminal.

The described embodiments of the invention and their equivalents may be realised in software or hardware or a combination thereof. They may be performed by general-purpose circuits associated with or integral to a communication device, such as digital signal processors (DSP), central processing units (CPU), co-processor units, field-programmable gate arrays (FPGA) or other programmable hardware, or by specialized circuits such as for example application-specific integrated circuits (ASIC). All such forms are contemplated to be within the scope of the invention.

The invention may be embodied within an electronic apparatus comprising circuitry/logic or performing methods according to any of the embodiments of the invention. The electronic apparatus may, for example, be a portable or handheld mobile radio communication equipment, a mobile radio terminal, a mobile telephone, a communicator, an electronic organizer, a smartphone, a computer, a notebook, an embedded drive, a mobile gaming device, or a (wrist) watch.

According to some embodiments of the invention, a computer program product comprises a computer readable medium such as, for example, a diskette or a CD-ROM. The computer readable medium may have stored thereon a computer program comprising program instructions. The computer program may be loadable into a data-processing unit, which may, for example, be comprised in a mobile terminal. When loaded into the data-processing unit, the computer program may be stored in a memory associated with or integral to the data-processing unit. According to some embodiments, the computer program may, when loaded into and run by the data-processing unit, cause the data-processing unit to execute method steps according to, for example, the methods shown in any of the Figures 2 or 3.

The invention has been described herein with reference to various embodiments. However, a person skilled in the art would recognize numerous variations to the described embodiments that would still fall within the scope of the invention. For example, the method embodiments described herein describes example methods through method steps being performed in a certain order. However, it is recognized that these sequences of events may take place in another order without departing from the scope of the invention. Furthermore, some method steps may be performed in parallel even though they have been described as being performed in sequence.

In the same manner, it should be noted that in the description of embodiments of the invention, the partition of functional blocks into particular units is by no means limiting to the invention. Contrarily, these partitions are merely examples. Functional blocks described herein as one unit may be split into two or more units. In the same manner, functional blocks that are described herein as being implemented as two or more units may be implemented as a single unit without departing from the scope of the invention.

Hence, it should be understood that the limitations of the described embodiments are merely for illustrative purpose and by no means limiting. Instead, the scope of the invention is defined by the appended claims rather than by the description, and all variations that fall within the range of the claims are intended to be embraced therein.

## Claims

1. A method for use in association with a multi-tab interpretation and rendering function of a computing device comprising:
associating (210, 310) at least one tab of the multi-tab interpretation and rendering function with a first item, the first item being associated with a first web resource;
**characterized by**
assigning (220, 320, 340) a first priority to the first item; and
reserving (230, 330) resources of the computing device to the first item based on the first priority.

2. The method of claim 1, wherein the priority of the first item is based on a content analysis of the first web resource.

3. The method of claim 2, wherein the content analysis comprises at least one of:
determining whether the web resource comprises only static information;
determining whether the web resource comprises a form field;
determining whether the web resource comprises a post form field;
determining whether the web resource comprises a get form field;
determining a number of key taps and/or mouse clicks entered in a form field of the web resource;
determining whether the web resource comprises AJAX code - Asynchronous JavaScript and XML, Extensible Markup Language;
determining whether the web resource comprises AJAX code, and whether the AJAX code has interacted with an server hosting the web resource;
determining an amount of JavaScript code comprised in the web resource; and
determining whether the web resource comprises one or more JavaScript event functions, and comparing a number of key taps and/or mouse clicks received by the one or more JavaScript event functions with an event input threshold.

4. The method of any of claims 1 through 3, wherein the priority of the first item is based on an analysis of the use history of the first web resource.

5. The method of claim 4, wherein the use history is retrieved from history information of the multi-tab interpretation and rendering function.

6. The method of any of claims 4 through 5, wherein the analysis of the use history comprises at least one of:
determining whether any content of the web resource is made visible at a present moment of time;
determining a number value associated with a number of times the web resource has been switched back to;
comparing a number value associated with a number of times the web resource has been switched back to with a switch back threshold;
determining a duration value associated with a duration between consecutive switch backs to the web resource;
comparing a duration value associated with a duration between consecutive switchbacks to the web resource with a duration threshold;
determining a number value associated with a number of tabs of the multi-tab interpretation and rendering function that have been spawned from the web resource;
comparing a number value associated with a number of tabs of the multi-tab interpretation and rendering function that have been spawned from the web resource with a spawned tab threshold;
determining a number value associated with a number of origin uniform resource locators - URLs - associated with the web resource;
comparing a number value associated with a number of origin URLs associated with the web resource with a origin URL threshold;
determining an amount of time elapsed since the first tab was displayed; and
determining a number of times the web resource has been associated with any tab of the multi-tab interpretation and rendering function.

7. The method of any of claims 1 through 6, further comprising:
assigning (220, 320, 340) a first classification to the first item; and
reserving (230, 330) resources of the computing device to the first item based on the first priority and the first classification.

8. The method of any of claims 1 through 7, further comprising:
associating each of a plurality of tabs of the multi-tab interpretation and rendering function with a respective item, each of the respective items being associated with a respective web resource;
assigning a respective priority to each of the respective items; and
reserving resources of the computing device to each of the respective items based on their respective priority.

9. The method of any of claims 1 through 8, wherein the first item associated with a first web resource comprises one of: a tab of the multi-tab interpretation and rendering function, a widget, a web application, an Internet page, an Internet site, a uniform resource locator - URL, a partial URL, a (partial) URI - uniform resource identifier, an Internet page file, and an Internet link.

10. The method of any of claims 1 through 9, wherein the resources of the computing device comprise at least one of storage resources, physical memory, virtual memory, secondary storage, processing resources, processor usage, data communication resources, and network bandwidth.

11. The method of any of claims 1 through 10, wherein the step of reserving resources of the computing device to the first item comprises at least one of:
determining whether or not to page out information relating to the first item from a physical memory;
determining whether or not to remove information relating to the first item from a virtual memory or a physical memory;
determining whether or not to remove information relating to the first item from a secondary storage;
determining whether or not to allow processor usage relating to the first item; and
determining whether or not to allow bandwidth usage relating to the first item.

12. The method of any of claims 1 through 11, wherein the step of assigning a first priority to the first item comprises:
assigning (320) an initial priority to the first item; and
updating (340) the first priority based on information obtained after assigning the initial priority value.

13. The method of claim 12, further comprising storing (345, 360) the updated first priority as associated with the first item in a history information of the multi-tab interpretation and rendering function.

14. The method of any of claims 1 through 13, further comprising:
allocating (230, 330) resources of the computing device to the first item based on the first priority.

15. The method of any of claim 1 through 14, wherein the multi-tab interpretation and rendering function is a multi-tab browser.

16. A computer program product comprising a computer readable medium, having thereon a computer program comprising program instructions, the computer program being loadable into a data-processing unit and adapted to cause the data-processing unit to execute the steps according to any of claims 1 to 15 when the computer program is run by the data-processing unit.

17. A software arrangement for use in association with a multi-tab interpretation and rendering function of a computing device comprising:
a module (411) adapted to associate at least one tab of the multi-tab interpretation and rendering function with a first item, the first item being associated with a first web resource;
**characterized by**
a module (413) adapted to assign a first priority to the first item; and
a module (414) adapted to reserve resources of the computing device to the first item based on the first priority.

18. The arrangement of claim 17, wherein the priority of the first item is based on at least one of:
a content analysis of the first web resource; and
an analysis of the use history of the first web resource.

19. The arrangement of any of claims 17 through 18, further comprising:
a module (414) adapted to allocate resources of the computing device to the first item based on the first priority.

20. A computing device comprising the arrangement according to any of claims 17 through 19.

21. The computing device of claim 20, further comprising storage resources (440, 450), processing resources (460) and data communication resources (420).

22. The computing device of claim 21, wherein the module adapted to reserve resources of the computing device is adapted to reserve at least one of the following resources: storage resources, physical memory, virtual memory, secondary storage, processing resources, processor usage, data communication resources, and network bandwidth.

23. The computing device according to any of claims 20 through 22, wherein the computing device is at least one of: a communication device, a mobile terminal (500), a mobile telephone, and a portable browsing device.
